# EUROPÄISCHE PATENTSCHRIFT

(11) **EP 2 947 293 B1**
(45) Veröffentlichungstag und Bekanntmachung des Hinweises auf die Patenterteilung: **01.03.2017**
(21) Anmeldenummer: 15000868.8
(22) Anmeldetag: 24.03.2015
(51) Int. Cl.: F01N 3/20, F01N 9/00

(54) **VERFAHREN ZUR KALIBRIERUNG EINES STEUERGERÄTES, DAS EINEN DURCH REAKTIONSKINETISCHE GLEICHUNGEN BESCHREIBBAREN TECHNISCHEN PROZESS STEUERT ODER REGELT, INSBESONDERE ZUR KALIBRIERUNG EINES EINE ABGASNACHBEHANDLUNG IN EINEM ABGASSTROM EINER BRENNKRAFTMASCHINE STEUERNDEN ODER REGELNDEN STEUERGERÄTES**
METHOD FOR CALIBRATING A CONTROL DEVICE THAT CONTROLS OR REGULATES A TECHNICAL PROCESS THAT CAN BE DESCRIBED USING REACTION KINETICS EQUATIONS, IN PARTICULAR FOR CALIBRATING A CONTROL DEVICE FOR CONTROLLING OR REGULATING THE TREATMENT OF EXHAUST GAS IN A FLOW OF EXHAUST GAS OF A COMBUSTION ENGINE
PROCÉDÉ D'ÉTALONNAGE D'UN APPAREIL DE COMMANDE COMMANDANT OU RÉGULANT UN PROCESSUS TECHNIQUE POUVANT ÊTRE DÉCRIT PAR ÉQUATIONS DE RÉACTION CINÉTIQUE, EN PARTICULIER POUR L'ÉTALONNAGE D'UN APPAREIL DE COMMANDE COMMANDANT OU RÉGULANT UN POST-TRAITEMENT DE GAZ D'ÉCHAPPEMENT DANS UN FLUX DE GAZ D'ÉCHAPPEMENT D'UN MOTEUR À COMBUSTION INTERNE

(30) Priorität: 22.05.2014 DE 102014007433
(43) Veröffentlichungstag der Anmeldung: 25.11.2015
(73) Patentinhaber: MAN Truck & Bus AG, 80995 München (DE)
(72) Erfinder: Bouillon, Eva, 96049 Bamberg (DE); Walde, Florian, Dietenhofen (DE); Grünbeck, Florian, 96515 Mönchsberg (DE)
(74) Vertreter: Liebl, Thomas

(56) Entgegenhaltungen:
- DE-A1-102011 081 346
- DE-A1-102011 103 346
- US-A1- 2003 216 855
- US-A1- 2010 050 614

## Beschreibung

Die Erfindung betrifft ein Verfahren zur Kalibrierung eines Steuergerätes, das einen durch reaktionskinetische Gleichungen beschreibbaren technischen Prozess steuert oder regelt, insbesondere zur Kalibrierung eines eine Abgasnachbehandlung in einem Abgasstrom einer Brennkraftmaschine steuernden oder regelnden Steuergerätes, nach dem Oberbegriff des Anspruchs 1. Der Einsatz von reaktionskinetischen Katalysatormodellen zur Kalibrierung von Steuergeräten bzw. Regelstrecken, wie diese in einem Fahrzeug, zum Beispiel einem Nutzfahrzeug, im Rahmen der Abgasnachbehandlung Verwendung finden, ist allgemein bekannt. Mittels eines derartigen Simulationsmodells können chemische bzw. physikalische Vorgänge der zum Beispiel Abgasnachbehandlung eines Verbrennungsmotors, um nur ein Beispiel zu nennen, simuliert werden, die am Prüfstand oftmals nur mit einem extrem hohem Aufwand darstellbar sind. Beispielsweise werden derartige Simulationsmodelle unter Verwendung einer kommerziell erhältlichen Simulationssoftware, zum Beispiel GT-Power® von Gamma Technologies Inc. erstellt. Mit einem derartigen, mittels einer Simulationssoftware erstellten, steuergeräteunabhängigen Simulationsmodell können die mehreren, während der jeweiligen Abgasnachbehandlung zeitversetzt und/oder parallel zueinander ablaufenden Reaktionen in Form von reaktionskinetischen Gleichungen, bei denen es sich um Differenzialgleichungen handelt, abgebildet werden. Die veränderlichen Gleichungsparameter der einzelnen reaktionskinetischen Gleichungen des Simulationsmodells werden dann anschließend mittels messtechnisch an einem Prüfstand erfasster realer Werte für die jeweiligen Gleichungsparameter kalibriert. Mittels eines derartigen Simulationsmodells können reale Gegebenheiten zwar zuverlässig nachgebildet werden, jedoch benötigen derartige Simulationsmodelle für das Lösen der Differenzialgleichungen eine je nach Modellgüte relativ hohe Rechenleistung, was sowohl zeitaufwendig als auch teuer ist. Aus diesem Grund wird auch die Kalibrierung eines eine Abgasnachbehandlung in einem Abgasstrom einer Brennkraftmaschine steuernden oder regelnden Steuergerätes relativ aufwendig und teuer.

Ein weiterer Nachteil eines derartigen Simulationsmodells ist, dass bei diesem Teilbereiche des Betriebsbereichs nicht ohne Einflussnahme auf andere Bereiche nachkalibriert werden können.

Aus der DE 10 2011 081346 A1 ist ein Verfahren zum Bedaten einer Funktion für ein Steuergerät vorgestellt, in welchem das datenbasierte Modell entsprechend Prüfstandsmessungen angepasst bzw. kalibriert wird.

Die DE 10 2011 103 346 A1 offenbart ein Verfahren zur modellbasierten Bestimmung der Temperaturverteilung einer Nachbehandlungseinheit der Abgase unter Verwendung eines SCR-Katalysators, in welchem ein SCR-Modell die NOₓ-Reaktionen als chemische Reaktionen für die SCR-Steuerung/Regelung bezogen auf Harnstoff als Reduktionsmittel über die Hauptreaktionen erfasst.

Es ist daher Aufgabe der vorliegenden Erfindung, ein Verfahren zur Kalibrierung eines Steuergerätes, das einen durch reaktionskinetische Gleichungen beschreibbaren technischen Prozess steuert oder regelt, insbesondere ein Verfahren zur Kalibrierung eines eine Abgasnachbehandlung in einem Abgasstrom einer Brennkraftmaschine steuernden oder regelnden Steuergerätes, zur Verfügung zu stellen, das einen relativ geringen Rechenaufwand erfordert und mittels dem Teilbereiche des Betriebsbereiches des Steuergerätes ohne Einflussnahme auf andere Bereiche einfachst im praktischen Betrieb nachkalibriert werden können.

Die Lösung dieser Aufgabe gelingt mit den Merkmalen des Anspruchs 1. Vorteilhafte Ausgestaltungen hierzu sind Gegenstand der darauf rückbezogenen Unteransprüche.

Gemäß Anspruch 1 wird ein Verfahren zur Kalibrierung eines Steuergerätes, das einen durch reaktionskinetische Gleichungen beschreibbaren technischen Prozess steuert oder regelt, insbesondere zur Kalibrierung eines eine Abgasnachbehandlung (zum Beispiel eine selektive katalytische Reduktion) in einem Abgasstrom einer Brennkraftmaschine steuernden oder regelnden Steuergerätes, vorgeschlagen, bei dem die mehreren, zum Beispiel während der jeweiligen Abgasnachbehandlung, zeitversetzt und/oder parallel zueinander ablaufenden Reaktionen in Form von reaktionskinetischen Gleichungen in einem Simulationsmodell abgebildet werden bzw. abgebildet sind, wobei die veränderlichen Gleichungsparameter der einzelnen reaktionskinetischen Gleichungen bzw. Differenzialgleichungen des Simulationsmodells mittels messtechnisch an einem Prüfstand erfasster realer Werte für die jeweiligen Gleichungsparameter kalibriert werden. Erfindungsgemäß ist vorgesehen, dass für das Steuergerät oder im Steuergerät ein vom Simulationsmodell unabhängiges und eine Mehrzahl von Kennfeldern aufweisendes Kennfeldmodell dadurch erzeugt wird, dass die die Reaktionskinetik beeinflussenden Reaktionsparameter jeder einzelnen (zum Beispiel im Rahmen der Abgasnachbehandlung) stattfindenden Reaktion als Kennfeldparameter verwendet werden und wenigstens ein Kennfeld aufspannen, wobei zur Bedatung der Kennfelder mittels des Simulationsmodells Werte für die die Reaktionskinetik beeinflussenden Kennfeldparameter ermittelt und dem Kennfeldmodell zugeführt werden. Anschließend wird zur Kalibrierung des Kennfeldmodells im realen Prozessbetrieb, insbesondere im realen Fahrbetrieb, und/oder am Prüfstand gezielt ein Wert für wenigstens einen der Kennfeldparameter wenigstens eines Kennfeldes des Kennfeldmodells messtechnisch erfasst und weiter mittels einer Auswerteeinrichtung ermittelt, ob der erfasste Messwert in einem definiert vorgegebenen Maße von dem im jeweiligen Kennfeld hinterlegten Wert des betrachteten Kennfeldparameters abweicht. Sollte letzteres der Fall sein, wird der hinterlegte Wert, und zwar ohne eine (Quer-)Beeinflussung der anderen von der Änderung nicht betroffenen Kennfelder des Kennfeldmodells, durch einen neuen Wert ersetzt. Ansonsten verbleibt es bei der ursprünglichen Einstellung.

Im Gegensatz zu den bisher verwendeten reaktionskinetischen Simulationsmodellen werden bei diesem erfindungsgemäßen Modell somit die reaktionskinetischen Gleichungen quasi für jede einzelne Reaktion in eigenen Kennfeldern bedatet. Die Abbildung der Realität erfolgt dabei, wie in einem herkömmlichen reaktionskinetischen Simulationsmodell zeit- und raumdiskret. Der Vorteil der erfindungsgemäßen Verfahrensführung ist jedoch, dass das erfindungsgemäße Kennfeldmodell eine Abbildung der reaktionskinetischen Zusammenhänge bei gleichzeitig geringem Rechenaufwand ermöglicht und es mit Hilfe von reaktionskinetischen Simulationsmodellen einfach automatisiert bedatet werden kann, wobei zudem Teilbereiche des Betriebsbereiches ohne Einflussnahme auf andere Bereiche nachkalibriert werden können. Durch die Kombination der Reaktionskinetik einerseits und Kennfeldern andererseits werden die Vorteile beider Methoden somit miteinander verbunden, so dass einem Applikationsingenieur trotz der Verwendung eines reaktionskinetischen Ansatzes nach wie vor eine große Freiheit bei der Anpassung der jeweiligen Datensätze verbleibt.

Können somit bisher entweder kennfeldbasierte Strategien angewendet werden, die direkt an Messungen bedatet werden oder alternativ dazu lediglich reaktionskinetische Ansätze verwendet werden, ermöglicht die erfindungsgemäße Lösung somit die Kombination der Reaktionskinetik mittels kennfeldbasierter Strategien, so dass die Vorteile beider Methoden miteinander verbunden werden können.

Mit der erfindungsgemäßen Verfahrensführung können somit Streckenmodelle in Steuergeräten für zum Beispiel die Abgasnachbehandlung erstellt und kalibriert werden, mittels denen zum Beispiel eine optimale Dosierstrategie für beispielsweise die selektive katalytische Reduktion entwickelt werden können (zum Beispiel im Hinblick auf die Euro VI-Norm). Grundsätzlich kann die erfindungsgemäße Verfahrensführung für jedwede durch reaktionskinetische Gleichungen beschreibbare technische Prozesse Verwendung finden, bei der in einem Simulationsmodell reaktionskinetische Differenzialgleichungen zum Beispiel numerisch gelöst werden müssen. Besonders bevorzugt ist jedoch, wie bereits eingangs ausgeführt, eine Verfahrensführung, bei der mittels des Steuergerätes eine Abgasnachbehandlung gesteuert wird. Besonders bevorzugt ist hierbei weiter eine Verfahrensführung, bei der die gesteuerte Abgasnachbehandlung eine selektive katalytische Reduktion ist, bei der die Stickoxide im Abgasstrom durch Zudosierung eines Reduktionsmittels, zum Beispiel einer wässrigen Harnstofflösung als Reduktionsmittel reduziert werden. Wenigstens ein Teil der in den nachstehenden Reaktionsgleichen wiedergegebenen und bei der selektiven katalytischen Reduktion ablaufenden Reaktionen wird zur Erstellung des steuergeräteunabhängigen Simulationsmodells unter Verwendung eines reaktionskinetischen Ansatzes in eine oder mehrere reaktionskinetische Gleichungen bzw. Differenzialgleichungen umgewandelt:
(1) Thermolyse: (NH₂)₂CO + H₂O → NH₃ + HNCO
(2) Hydrolyse: HNCO + H₂O → NH₃ + CO₂
(3) Adsorption: S+NH₃ → SNH₃
(4) Desorption: SNH₃ → S + NH₃ / Rückreaktion zu (3)
(5) Standard SCR: SNH₃ + NO + 0.25O₂ → N₂ + 1.5H₂O + S
(6) Langsame SCR: 4SNH₃ + 3NO₂ + 0.25O₂ → 3.5N₂ + 6H₂O + 4S
(7) Schnelle SCR: 4SNH₃ + 2NO + 2NO₂ →4N₂ + 6H₂O + 4S
(8) NH3 Oxidation: 4SNH₃ +3O₂ → 2N₂ + 6H₂O + 4S
(9) Lachgas-Bildung (unerwünschte Nebenreaktion): 2SNH₃ + 2NO₂ → N₂O + N₂ + 3H₂O + 2S
(10) NO-Oxidation + Rückreaktion: NO + 0.5O₂ → NO₂
   NO₂ → NO + 0.5O₂
mit S: Freie Katalytische Oberfläche / NH₃: Ammoniak in Gasphase / SNH₃: an der katalytischen Oberfläche adsorbiertes Ammoniak / (NH₂)₂CO: Harnstoff / HNCO: Isocyansäure / NO: Stickstoffmonoxid / NO₂: Stickstoffdioxid / O₂: Sauerstoff / N₂: Stickstoff / H₂O: Wasser / N₂O: Lachgas

Wie bereits zuvor dargestellt, können mit der erfindungsgemäßen Lösung dann insbesondere optimierte Dosierstrategien für die Zudosierung eines Reduktionsmittels im Rahmen eines komplexen Abgasnachbehandlungsprozesses, wie es die selektive katalytische Reduktion darstellt, auf einfache und funktionssichere Weise ermittelt werden.

Als kinetischer Ansatz eignet sich zum Beispiel der Ansatz von Langmuir und Hinshelwood, gemäß dem vorgesehen ist, dass bei der Absorption die Ausgangskomponenten an den aktiven Zentren der Katalysatoroberfläche chemiesorbiert werden und anschließend aus diesem Zustand heraus miteinander reagieren. Alternativ kann auch der Eley-Rideal-Ansatz verwendet werden, gemäß dem ein chemiesorbierter Ausgangsstoff mit einem anderen Ausgangsstoff in der Gasphase reagiert.

Diese reaktionskinetischen Ansätze sind allgemein bekannt. Durch Variation der Eingangsgrößen, wie zum Beispiel Abgasmassenstrom, Stickoxidkonzentration, Temperatur und/oder NH₃-Massenstrom, und/oder durch Variation der internen Systemgrößen, wie beispielsweise an der katalytischen Oberfläche absorbiertes NH₃, können die im Simulationsmodell abgebildeten reaktionskinetischen Differentialgleichungen stimuliert werden, wobei mit dem Ergebnis die Bedatung der Kennfelder durchgeführt werden kann.

Die die Kennfelder aufspannenden und die Reaktionskinetik beeinflussenden Kennfeldparameter jeder einzelnen Reaktion, insbesondere jeder einzelnen im Rahmen einer Abgasnachbehandlung stattfindenden Reaktion, können somit besonders vorteilhaft einerseits durch messbare Größen (beispielsweise sind dies im Rahmen einer Abgasnachbehandlung ein Abgasmassenstrom und/oder eine Stickoxidkonzentration und/oder eine Temperatur und/ein NH₃-Massenstrom) gebildet sein, die auf schnelle, einfache und funktionssichere Weise durch geeignete Messinstrumente im Rahmen des realen Prozessbetriebs, zum Beispiel im realen Fahrbetrieb, bzw. am Prüfstand erfasst bzw. gemessen werden können. Andererseits können die die Kennfelder aufspannenden und die Reaktionskinetik beeinflussenden Kennfeldparameter jeder einzelnen Reaktion, insbesondere jeder einzelnen im Rahmen einer Abgasnachbehandlung stattfindenden Reaktion, grundsätzlich aber auch durch das vorhandene Simulationsmodell ermittelt werden, zum Beispiel in den Fällen, in denen in der realen Anwendung nicht bzw. nicht sinnvoll gemessen werden kann, wie dies beispielsweise bei der Menge des an der katalytischen Oberfläche adsorbierten NH₃ der Fall ist. Der besondere Vorteil liegt hier insbesondere darin, dass die Kalibrierung des Kennfeldmodells und damit des Steuergerätes nicht nur auf einfache, schnelle und funktionssichere Weise durchgeführt werden kann, sondern, wie bereits zuvor dargestellt, auch ohne eine Querbeeinflussung der einzelnen Parameter erfolgen kann. Das heißt, dass zur Kalibrierung des Kennfeldmodells zumindest für einen Großteil der Parameter einfachst im realen Prozess- bzw. Fahrbetrieb und/oder am Prüfstand gezielt ein Wert für wenigstens einen der Kennfeldparameter wenigstens eines Kennfeldes messtechnisch erfasst und anschließend der Auswerteeinrichtung zugeführt werden kann.

Ein mit einem erfindungsgemäßen Verfahren kalibriertes Steuergerät zur Steuerung oder Regelung einer Abgasnachbehandlung eines Abgasstroms kann zum Beispiel in Verbindung mit einer Brennkraftmaschine für ein Fahrzeug, zum Beispiel ein Nutzfahrzeug, oder ein Schiff Verwendung finden.

Die Erfindung wird nachfolgend anhand einer Zeichnung näher erläutert.

Die einzige Figur zeigt schematisch ein Fließbild mit einem erfindungsgemäßen Steuergerät bzw. Steuergerätemodell, das hier ein Kennfeldmodell sowie eine Auswerteeinrichtung aufweist.

Dem Steuergerät ist ein Simulationsmodell sowie ein Prüfstand und/oder eine Brennkraftmaschine mit einer Abgasnachbehandlung zugeordnet.

Das beispielsweise mittels eines herkömmlichen Simulationstools, zum Beispiel GT-Power® erstellte Simulationsmodell, in dem die mehreren, während der jeweiligen Abgasnachbehandlung zeitversetzt und/oder parallel zueinander ablaufenden Reaktionen in Form von reaktionskinetischen Gleichungen (Reaktion 1, Reaktion 2 etc.) abgebildet sind, wird in einem ersten Schritt kalibriert. Konkret werden hierzu die veränderlichen Gleichungsparameter der einzelnen reaktionskinetischen Gleichungen des Simulationsmodells mittels messtechnisch an einem Prüfstand erfasster realer Werte für die jeweiligen Gleichungsparameter kalibriert (Schritt 1: Kalibrieren).

Das eine Mehrzahl von Kennfeldern aufweisende Kennfeldmodell wird dadurch erzeugt, dass die die Reaktionskinetik beeinflussenden Reaktionsparameter jeder einzelnen im Rahmen der Abgasnachbehandlung stattfindenden Reaktion als Kennfeldparameter verwendet werden, um die diversen Kennfelder aufzuspannen. Konkret werden hierzu pro Reaktion ein oder mehrere Kennfelder aufgespannt werden, die jeweils einen Kennfeldsatz ausbilden (Schritt 2: Modellieren).

Zur Bedatung dieser Kennfelder bzw. Kennfeldsätze werden dann mittels des Simulationsmodells Werte für die die Reaktionskinetik beeinflussenden Kennfeldparameter (Parameter 1, Parameter 2, Parameter 3, Parameter 4, etc.) ermittelt und dem Kennfeldmodell zugeführt, wodurch die diversen Kennfelder aufgespannt werden (Schritt 3: Bedaten). Wie beispielhaft anhand des Parameters 1 dargestellt, können einzelne der Parameter auch unterschiedlichen Kennfeldern bzw. Kennfeldsätzen zugeführt werden.

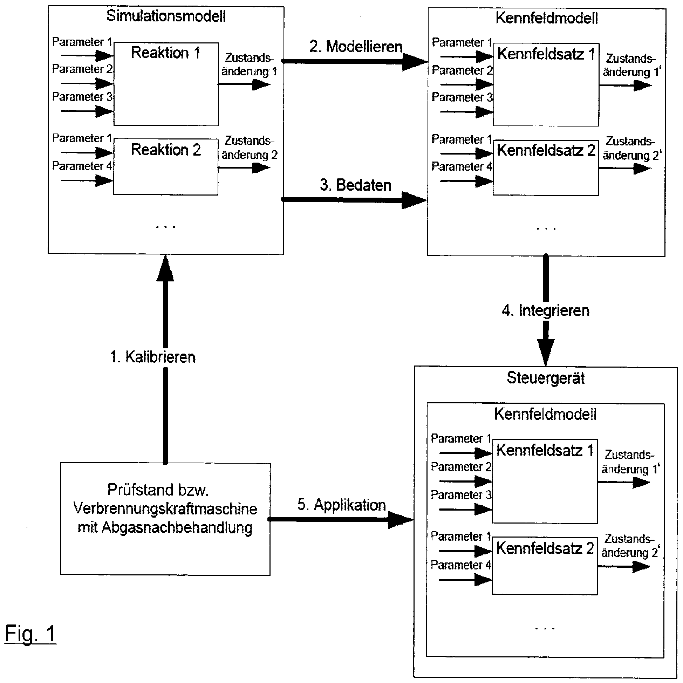

Das Kennfeldmodell ist wie in der Figur 1 durch den Punkt 4 (Integrieren) dargestellt, letztendlich Bestandteil des Steuergerätes, so dass zur Kalibrierung des Kennfeldmodells im realen Fahrbetrieb und/oder am Prüfstand gezielt ein Wert für wenigstens einen der Kennfeldparameter wenigstens eines Kennfeldes bzw. Kennfeldsatzes des Kennfeldmodells messtechnisch erfasst und der Bestandteil des Steuergerätes bildenden Auswerteeinrichtung zugeführt wird. Von der Auswerteeinrichtung wird dann ermittelt, ob der erfasste Messwert in einem definiert vorgegebenen Maße von dem im jeweiligen Kennfeld hinterlegten Wert des betrachteten Kennfeldparameters abweicht, wobei bejahendenfalls dann der hinterlegte Wert durch einen neuen Wert ersetzt wird, und zwar ohne eine Beeinflussung der anderen von der Änderung nicht betroffenen Kennfelder des Kennfeldmodells (Schritt 5: Applikation).

Die im Rahmen der Bedatung bzw. Applikation bewirkten Zustandsänderungen des Kennfeldmodells sind in der einzigen Figur als Zustandsänderung 1, Zustandsänderung 2, etc. bzw. als Zustandsänderung 1', Zustandsänderung 2', etc. bezeichnet. Die Hochstriche bedeuten hierbei, dass die Zustandsänderungen des Simulationsmodells und des Kennfeldmodells nicht identisch sind.

Mit einer derartigen konkreten erfindungsgemäßen Verfahrensführung, zum Beispiel im Rahmen der Entwicklung einer Dosierstrategie für eine selektive katalytische Reduktion, lassen sich die zuvor genannten Vorteile erzielen.

## Patentansprüche

1. Verfahren zur Kalibrierung eines Steuergerätes, das einen durch reaktionskinetische Gleichungen beschreibbaren technischen Prozess steuert oder regelt, insbesondere zur Kalibrierung eines eine Abgasnachbehandlung in einem Abgasstrom einer Brennkraftmaschine steuernden oder regelnden Steuergerätes, mit einem Simulationsmodell, in dem die mehreren, insbesondere während einer Abgasnachbehandlung, zeitversetzt und/oder parallel zueinander ablaufenden Reaktionen in Form von reaktionskinetischen Gleichungen abgebildet sind, wobei die veränderlichen Gleichungsparameter der einzelnen reaktionskinetischen Gleichungen des Simulationsmodells mittels messtechnisch an einem Prüfstand erfasster realer Werte für die jeweiligen Gleichungsparameter kalibriert werden,
**dadurch gekennzeichnet,**
**dass** für das oder im Steuergerät ein vom Simulationsmodell unabhängiges und eine Mehrzahl von Kennfeldern aufweisendes Kennfeldmodell dadurch erzeugt wird, dass die die Reaktionskinetik beeinflussenden Reaktionsparameter jeder einzelnen, insbesondere im Rahmen einer Abgasnachbehandlung, stattfindenden Reaktion als Kennfeldparameter verwendet werden und wenigstens ein Kennfeld aufspannen, wobei zur Bedatung der Kennfelder mittels des Simulationsmodells Werte für die die Reaktionskinetik beeinflussenden Kennfeldparameter ermittelt und dem Kennfeldmodell zugeführt werden, und
**dass** anschließend zur Kalibrierung des Kennfeldmodells im realen Prozessbetrieb und/oder am Prüfstand gezielt ein Wert für wenigstens einen der Kennfeldparameter wenigstens eines Kennfeldes des Kennfeldmodells messtechnisch erfasst wird und anschließend mittels einer Auswerteeinrichtung ermittelt wird, ob der erfasste Messwert in einem definiert vorgegebenen Maße von dem im jeweiligen Kennfeld hinterlegten Wert des betrachteten Kennfeldparameters abweicht, wobei bejahendenfalls der hinterlegte Wert, ohne eine Beeinflussung der anderen von der Änderung nicht betroffenen Kennfelder des Kennfeldmodells, durch einen neuen Wert ersetzt wird.

2. Verfahren nach Anspruch 1, **dadurch gekennzeichnet,**
**dass** die mittels des Steuergerätes gesteuerte Abgasnachbehandlung eine selektive katalytische Reduktion ist, bei der die Stickoxide im Abgasstrom durch Zudosierung eines Reduktionsmittels, insbesondere einer wässrigen Harnstofflösung als Reduktionsmittel, reduziert werden, und
**dass** wenigstens ein Teil der in den nachstehenden Reaktionsgleichungen wiedergegebenen und bei der selektiven katalytischen Reduktion ablaufenden Reaktionen zur Erstellung des steuergeräteunabhängigen Simulationsmodells unter Verwendung eines reaktionskinetischen Ansatzes, insbesondere des Langmuir-Hinshelwood-Ansatzes oder des Eley-Rideal Ansatzes, in eine oder mehrere reaktionskinetische Gleichungen umgewandelt wird:
(1) Thermolyse: (NH₂)₂CO + H₂O → NH₃ + HNCO
(2) Hydrolyse: HNCO + H₂O → NH₃ + CO₂
(3) Adsorption: S+NH₃ → SNH₃
(4) Desorption: SNH₃ → S + NH₃ / Rückreaktion zu (3)
(5) Standard SCR: SNH₃ + NO + 0.25O₂ → N₂ + 1.5H₂O + S
(6) Langsame SCR: 4SNH₃ + 3NO₂ + 0.25O₂ → 3.5N₂ + 6H₂O + 4S
(7) Schnelle SCR: 4SNH₃ + 2NO + 2NO₂ → 4N₂ + 6H₂O + 4S
(8) NH3 Oxidation: 4SNH₃ +3O₂ → 2N₂ + 6H₂O + 4S
(9) Lachgas-Bildung (unerwünschte Nebenreaktion): 2SNH₃ + 2NO₂ → N₂O + N₂ + 3H₂O + 2S
(10) NO-Oxidation + Rückreaktion: NO + 0.5O₂ → NO₂
NO₂ → NO + 0.5O₂
mit S: Freie Katalytische Oberfläche / NH₃: Ammoniak in Gasphase / SNH₃: an der katalytischen Oberfläche adsorbiertes Ammoniak / (NH₂)₂CO: Harnstoff / HNCO: Isocyansäure / NO: Stickstoffmonoxid / NO₂: Stickstoffdioxid / O₂: Sauerstoff / N₂: Stickstoff / H₂O: Wasser / N₂O: Lachgas

3. Verfahren nach Anspruch 1 oder 2, **dadurch gekennzeichnet, dass** die die Kennfelder aufspannenden und die Reaktionskinetik beeinflussenden Kennfeldparameter jeder einzelnen Reaktion, insbesondere jeder einzelnen im Rahmen einer Abgasnachbehandlung stattfindenden Reaktion, durch Eingangsgrößen und/oder durch interne Systemgrößen gebildet sind,
dass zur Bedatung der Kennfelder mittels des Simulationsmodells Werte für diese Kennfeldparameter ermittelt und dem Kennfeldmodell zugeführt werden, und
dass zur Kalibrierung des Kennfeldmodells im realen Prozessbetrieb, insbesondere im realen Fahrbetrieb, und/oder am Prüfstand gezielt ein Wert für wenigstens einen der Kennfeldparameter wenigstens eines Kennfeldes messtechnisch erfasst und anschließend der Auswerteeinrichtung zugeführt wird.

4. Verfahren nach Anspruch 3, **dadurch gekennzeichnet, dass** die wenigstens eine Eingangsgröße bei einer Abgasnachbehandlung ein Abgasmassenstrom und/oder eine Stickoxidkonzentration und/oder eine Temperatur und/oder einen NH₃-Massenstrom ist.

5. Verfahren nach Anspruch 3 oder 4, **dadurch gekennzeichnet, dass** die wenigstens eine interne Systemgröße bei einer Abgasnachbehandlung die Menge des an der katalytischen Oberfläche adsorbierten NH₃ ist.

## Claims

1. Method for calibrating a control device which controls or regulates a technical process which can be described by reaction-kinetic equations, in particular for calibrating a control device controlling or regulating an exhaust gas after-treatment in an exhaust gas stream from an internal combustion engine, having a simulation model in which the plurality of reactions which proceed, in particular during an exhaust gas after-treatment, offset in time and/or in parallel are modelled in the form of reaction-kinetic equations, where the variable equation parameters of the individual reaction-kinetic equations of the simulation model are calibrated by means of real values for the respective equation parameters measured on a test bench, **characterized in that** a performance characteristics model which is independent of the simulation model and has a plurality of sets of performance characteristics is produced from the or in the control device, **in that** the reaction parameters which influence the reaction kinetics of each individual reaction taking place, in particular in the context of an exhaust gas after-treatment, are used as performance characteristics parameters and span at least one set of performance characteristics, where, for entering data into the sets of performance characteristics by means of the simulation model, values for the performance characteristics parameters which influence the reaction kinetics are determined and entered into the performance characteristics model and **in that** subsequently, for calibration of the performance characteristics model, a value for at least one of the performance characteristics parameters of at least one set of performance characteristics of the performance characteristics model is measured in a targeted manner in the real process operation and/or on a test bench and it is subsequently determined by means of an evaluation device whether the measured value deviates to a predetermined extent from the value of the performance characteristics parameter in question stored in the respective set of performance characteristics, where if the answer is yes the stored value is replaced by a fresh value without influencing the other sets of performance characteristics of the performance characteristics model which are not affected by the change.

2. Method according to Claim 1, **characterized in that** the exhaust gas after-treatment controlled by means of the control device is a selective catalytic reduction in which the nitrogen oxides in the exhaust gas stream are reduced by introduction of a reducing agent, in particular an aqueous urea solution as reducing agent, and **in that** at least part of the reactions which proceed in the selective catalytic reduction and are shown in the following reaction equations is, for the purpose of setting up the control device-independent simulation model, converted into one or more reaction-kinetic equations using a reaction-kinetic model, in particular the Langmuir-Hinshelwood model or the Eley-Rideal model,
(1) Thermolysis: (NH₂)₂CO+H₂O → NH₃+HNCO
(2) Hydrolysis: HNCO+H₂O → NH₃ + CO₂
(3) Adsorption: S+NH₃ → SNH₃
(4) Desorption: SNH₃ → S + NH₃/reverse reaction to (3)
(5) Standard SCR: SNH₃ + NO + 0.25O₂ → N₂ + 1.5H₂O + S
(6) Slow SCR: 4SNH₃ + 3NO₂ + 0.25O₂ → 3.5N₂ + 6H₂O + 4S
(7) Fast SCR: 4SNH₃ + 2NO + 2NO₂ → 4N₂ + 6H₂O + 4S
(8) NH₃ oxidation: 4SNH₃ + 3O₂ → 2N₂ + 6H₂O + 4S
(9) Nitrous oxide formation (undesirable secondary reaction): 2SNH₃ + 2NO₂ → N₂O + N₂ + 3H₂O + 2S
(10) NO oxidation + reverse reaction: NO + 0.5O₂ → NO₂
NO₂ → NO + 0.5O₂
where S: free catalytic surface area / NH₃: ammonia in gas phase / SNH₃: ammonia adsorbed on the catalytic surface / (NH₂)₂CO: urea / HNCO: isocyanic acid / NO: nitrogen monoxide / NO₂: nitrogen dioxide / O₂: oxygen / N₂: nitrogen / H₂O: water / N₂O: nitrous oxide.

3. Method according to Claim 1 or 2, **characterized in that** the performance characteristics parameters which span the sets of performance characteristics and influence the reaction kinetics of each individual reaction, in particular each individual reaction taking place in the context of an exhaust gas after-treatment, are formed by input parameters and/or by internal system parameters, **in that**, for the purpose of entering data into the sets of performance characteristics by means of the simulation model, values for these performance characteristics parameters are determined and entered into the performance characteristics model and **in that**, to calibrate the performance characteristics model, a value for at least one of the performance characteristics parameters of at least one set of performance characteristics is measured in a targeted manner in real process operation, in particular in real travelling operation, and/or on a test bench and subsequently entered into the evaluation device.

4. Method according to Claim 3, **characterized in that** the at least one input parameter in an exhaust gas after-treatment is an exhaust gas mass flow and/or a nitrogen oxide concentration and/or a temperature and/or an NH₃ mass flow.

5. Method according to Claim 3 or 4, **characterized in that** the at least one internal system parameter in an exhaust gas after-treatment is the amount of NH₃ adsorbed on the catalytic surface.

## Revendications

1. Procédé d'étalonnage d'un appareil de commande commandant ou régulant un processus technique pouvant être décrit par des équations de réaction cinétique, en particulier pour l'étalonnage d'un appareil de commande commandant ou régulant un post-traitement de gaz d'échappement dans un flux de gaz d'échappement d'un moteur à combustion interne, avec un modèle de simulation dans lequel les réactions qui se déroulent de manière décalée dans le temps et/ou en parallèle les unes des autres, notamment pendant un post-traitement de gaz d'échappement, sont représentées sous la forme d'équations de réaction cinétique, les paramètres ajustables des équations de réaction cinétique individuelles du modèle de simulation étant étalonnés au moyen de valeurs réelles des paramètres d'équation respectifs, déterminées sur un banc d'essai par mesure, **caractérisé en ce que**
un modèle cartographique indépendant du modèle de simulation et comprenant une pluralité de cartographies pour le ou dans l'appareil de commande est généré en utilisant les paramètres de réaction influençant la cinétique de réaction de chaque réaction individuelle ayant lieu, notamment dans le cadre d'un post-traitement de gaz d'échappement, en tant que paramètres cartographiques, et en fixant au moins une cartographie, des valeurs des paramètres cartographiques influençant la cinétique de réaction étant déterminées et introduites dans le modèle cartographique pour la paramétrisation des cartographies au moyen du modèle de simulation, et
**en ce qu'**ensuite, pour l'étalonnage du modèle cartographique dans l'exploitation de procédé réelle et/ou sur le banc d'essai, une valeur d'au moins un des paramètres cartographiques d'au moins une cartographie du modèle cartographique est déterminée de manière ciblée par mesure, puis il est calculé au moyen d'un dispositif d'évaluation si la valeur mesurée déterminée diffère dans une mesure prédéterminée définie de la valeur consignée dans la cartographie respective du paramètre cartographique en question, dans l'affirmative, la valeur consignée étant remplacée par une nouvelle valeur sans influencer les autres cartographies du modèle cartographique non concernées par la modification.

2. Procédé selon la revendication 1, **caractérisé en ce que** le post-traitement de gaz d'échappement commandé par l'appareil de commande est une réduction catalytique sélective lors de laquelle les oxydes d'azote dans le flux de gaz d'échappement sont réduits par ajout d'un réducteur, notamment d'une solution aqueuse d'urée en tant que réducteur, et
**en ce qu'**au moins une partie des réactions représentées par les équations de réaction suivantes et qui se déroulent lors de la réduction catalytique sélective sont transformées en utilisant un mécanisme de réaction cinétique, notamment le mécanisme de Langmuir-Hinshelwood ou le mécanisme de Eley-Rideal, en une ou plusieurs équations de réaction cinétique, pour l'établissement du modèle de simulation indépendant de l'appareil de commande :
(1) thermolyse : (NH₂)₂CO + H₂O → NH₃ + HNCO
(2) hydrolyse : HNCO + H₂O → NH₃ + CO₂
(3) adsorption : S + NH₃ → SNH₃
(4) désorption : SNH₃ → S + NH₃ / réaction retour de (3)
(5) SCR standard: SNH₃ + NO + 0,25 O₂ → N2 + 1,5 H₂O + S
(6) SCR lente : 4 SNH₃ + 3 NO₂ + 0,25 O₂ → 3,5 N₂ + 6 H₂O + 4 S
(7) SCR rapide : 4 SNH₃ + 2 NO + 2 NO₂ → 4 N₂ + 6 H₂O + 4 S
(8) oxydation de NH₃ : 4 SNH₃ + 3 O₂ → 2 N₂ + 6 H₂O + 4 S
(9) formation de gaz hilarant (réaction secondaire indésirable) : 2 SNH₃ + 2 NO₂ → N₂O + N₂ + 3 H₂O + 2 S
(10) oxydation de NO + réaction retour : NO + 0,5 O₂ → NO₂
NO₂ → NO + 0,5 O₂
avec S : surface catalytique libre / NH₃ : ammoniac en phase gazeuse / SNH₃ : ammoniac adsorbé sur la surface catalytique / (NH₂)₂CO : urée / HNCO : acide isocyanique / NO : monoxyde d'azote / NO₂ : dioxyde d'azote / O₂ : oxygène / N₂ : azote / H₂O : eau / N₂O : gaz hilarant.

3. Procédé selon la revendication 1 ou 2, **caractérisé en ce que** les paramètres cartographiques qui fixent les cartographies et qui influencent la cinétique de réaction de chaque réaction individuelle, notamment de chaque réaction individuelle ayant lieu dans le cadre d'un post-traitement de gaz d'échappement, sont formés par des grandeurs d'entrée et/ou par des grandeurs de système internes,
**en ce que**, pour la paramétrisation des cartographies, des valeurs sont déterminées pour ces paramètres cartographiques au moyen du modèle de simulation et introduites dans le modèle cartographique, et
pour l'étalonnage du modèle cartographique dans l'exploitation de procédé réelle, notamment dans l'exploitation de conduite réelle, et/ou sur le banc d'essai, une valeur d'au moins un des paramètres cartographiques d'au moins une cartographie est déterminée de manière ciblée par mesure, puis introduite dans le dispositif d'évaluation.

4. Procédé selon la revendication 3, **caractérisé en ce que** ladite au moins une grandeur d'entrée lors d'un post-traitement de gaz d'échappement est un débit de gaz d'échappement et/ou une concentration d'oxyde d'azote et/ou une température et/ou un débit de NH₃.

5. Procédé selon la revendication 3 ou 4, **caractérisé en ce que** ladite au moins une grandeur de système interne lors d'un post-traitement de gaz d'échappement est la quantité de NH₃ adsorbé sur la surface catalytique.
